(19) Europäisches Patentamt
European Patent Office
Office européen des brevets

(11) **EP 3 839 556 B1**

(12) **EUROPÄISCHE PATENTSCHRIFT**

(45) Veröffentlichungstag und Bekanntmachung des Hinweises auf die Patenterteilung:
**02.03.2022   Patentblatt 2022/09**

(21) Anmeldenummer: **20212193.5**

(22) Anmeldetag: **07.12.2020**

(51) Internationale Patentklassifikation (IPC):
**G01S 7/4863** (2020.01)    **G01S 7/487** (2006.01)
**G01S 17/89** (2020.01)    **G01S 17/48** (2006.01)
**G01S 7/486** (2020.01)

(52) Gemeinsame Patentklassifikation (CPC):
**G01S 7/4863; G01S 7/4868; G01S 17/48; G01S 17/89**

(54) **OPTOELEKTRONISCHER SENSOR UND VERFAHREN ZUR ERFASSUNG EINES OBJEKTS**

OPTOELECTRONIC SENSOR AND METHOD FOR DETECTING AN OBJECT

CAPTEUR OPTOÉLECTRONIQUE ET PROCÉDÉ DE DÉTECTION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2019   DE 102019134701**

(43) Veröffentlichungstag der Anmeldung:
**23.06.2021   Patentblatt 2021/25**

(73) Patentinhaber: **SICK AG**
**79183 Waldkirch (DE)**

(72) Erfinder: **Zwölfer, Ulrich**
**79183 Waldkirch (DE)**

(56) Entgegenhaltungen:
**EP-A1- 2 711 667    EP-A1- 3 339 887**
**EP-A2- 3 537 339    US-A1- 2019 146 071**
**US-B1- 8 188 418**

**Beschreibung**

Die Erfindung betrifft einen optoelektronischen Sensor und ein Verfahren zur Erfassung eines Objekts in einem Überwachungsbereich nach dem Oberbegriff von Anspruch 1 beziehungsweise 13.

Es gibt verschiedene Messprinzipien, um mit einem optoelektronischen Sensor den Abstand zu einem erfassten Objekt zu bestimmen. Lichtlaufzeitverfahren messen die Laufzeit eines Lichtsignals, die über die Lichtgeschwindigkeit dem gesuchten Abstand entspricht. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Da die Lichtlaufzeiten extrem kurz sind, ist eine Abstandsauflösung im Bereich von Zentimetern oder gar Millimetern bereits eine große Herausforderung, und feinere Auflösungen sind zumindest bislang technisch kaum erreichbar. Dafür sind mit weitgehend gleicher Genauigkeit auch große Reichweiten möglich.

Bei einem Triangulationsverfahren liegen Lichtsender und Lichtempfänger in einem Basisabstand nebeneinander. Je nach Abstand des Objekts, welches das ausgesandte Licht zurückwirft, wird das Empfangslicht an einer anderen Position auf einem ortsaufgelösten Lichtempfänger registriert und der Auftreffort in den Abstand umgerechnet. Triangulation ist für große Abstände weniger geeignet, dafür im Nahbereich extrem präzise bis in den Mikrometerbereich. Die erzielbare Reichweite hängt natürlich vom konkreten Sensor und Parametern wie Sendeleistung auch unter Berücksichtigung von Augenschutz, Baugröße und damit Größe der Empfangslinse sowie dem Basisabstand ab, ist aber jedenfalls gegenüber Lichtlaufzeitverfahren deutlich beschränkt.

Der gemessene Abstand kann unmittelbar die Ausgabegröße des Sensors sein. Es gibt aber auch schaltende Systeme, die ein Objekt nur dann erfassen, wenn es sich in einem bestimmten Abstandsbereich befindet. Dazu zählen hintergrundausblendende Lichttaster, die Objekte ab einer bestimmten Entfernung ignorieren, und Lichtschranken, die den Abstand zum zugeordneten Reflektor überwachen.

Die Anforderungen an einen entfernungsmessenden optoelektronischen Sensor können sich je nach Anwendung und Umgebungsbedingungen erheblich unterscheiden. Der abzudeckende Dynamikbereich umfasst nahe und ferne Objekte, zudem unterschiedliche Remissionen etwa von glänzenden Flächen bis hinunter zu beispielsweise schwarzem Samt.

Eine besonders große Empfindlichkeit wird mit Lawinenphotodioden erzielt, die im sogenannten Geiger-Modus betrieben werden (SPAD, Single Photon Avalanche Diode). In einer SPAD wird eine Vorspannung oberhalb der Durchbruchspannung angelegt, und dann genügt bereits ein einziger, durch ein einzelnes Photon freigesetzter Ladungsträger zum Auslösen einer nicht mehr kontrollierten Lawine, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine Besonderheit von SPADs ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden in der Praxis mehrere SPADs gemeinsam ausgewertet. Bezüglich dieser und weiterer allgemeiner Eigenschaften von SPADs sei beispielhaft auf den Artikel Eisele, Andreas, et al. "185 MHz count rate, 139 dB dynamic range singlephoton avalanche diode with active quenching circuit in 130 nm CMOS technology." Int. Image Sensor Workshop (IISW), Onuma, Hokkaido, 2011 verwiesen.

SPADs werden für Lichtlaufzeitmessungen verwendet, sind aber als Ersatz für einen Bildsensor ungeeignet, da sie letztlich binär auf einfallendes Licht reagieren und daher zumindest direkt kein Helligkeitsbild eines Objekts beziehungsweise Überwachungsbereichs liefern können. Aus diesem Grund ist auch eine Triangulation zumindest mit hoher Auflösung im Subpixelbereich mit SPADs erst einmal nicht möglich, da sie ebenfalls auf Intensitätswerten basiert.

Nun wäre prinzipiell denkbar, einen SPAD-Sensor mit einem Bildsensor zu kombinieren, um mehr Informationen über das Objekt und den Überwachungsbereich zu erhalten. Das erfordert aber komplexe Systeme mit mehreren Detektoren und Empfangsoptiken, die nicht nur teuer, sondern auch baugroß werden und zudem erheblichen Justageaufwand erfordern, um die unterschiedlichen Sichtfelder der Einzelsysteme in Übereinstimmung zu bringen.

Die noch unveröffentlichte deutsche Patentanmeldung mit dem Aktenzeichen 102018132473.1 schlägt einen Weg vor, wie mit SPAD-Detektoren doch eine Triangulation zusätzlich zu einer Lichtlaufzeitmessung möglich wird. Dazu werden mit einer SPAD-Empfängerzeile Mehrfachmessungen durchgeführt und die Zeitpunkte der durch Empfang eines Lichtpulses ausgelösten Lawinenereignisse je Empfangspixel in einem Histogramm gesammelt. Diese Histogramme ermöglichen zum einen eine Bestimmung des Empfangszeitpunkts für die Lichtlaufzeitmessung und zugleich auch einen Rückschluss bezüglich des Auftrefforts des Empfangslichtflecks und damit eine Triangulation. Die Empfangspixel werden aber stets als SPADs betrieben, allenfalls können sie durch Absenken der Vorspannung unter die Durchbruchspannung deaktiviert werden. Die um Größenordnungen schwächeren Empfangssignale solcher deaktivierter Empfangspixel bleiben unbeachtet, es wären auch gar keinen geeigneten Auswertungsschaltungen vorgesehen.

In dem Artikel Hallman, Lauri, et al. "On 2-D Rangefinding Using a~ 1 nJ/~ 100 ps Laser Diode Transmitter and a CMOS SPAD Matrix." IEEE Photonics Journal (2018) sowie in der WO 2017/17811 A1 wird jeweils eine Entfernungsmessung mittels Pulslaufzeitverfahren und einer SPAD-Matrix beschrieben.

Die DE 10 2011 005 740 A1 offenbart ebenfalls eine Messvorrichtung zur optischen Messung einer Entfernung mit einem Lichtlaufzeitverfahren und einer SPAD-Matrix. Es wird diskutiert, dass aufgrund des Triangulationseffekts der Empfangslichtfleck seitlich auswandert, und es werden Maßnahmen vorgeschlagen, dies zu korrigieren. Eine Abstandsmessung mittels Triangulation erfolgt aber nicht.

Die DE 10 2004 037 137 B4 befasst sich mit einem Verfahren zur Entfernungsmessung durch Bestimmung der Laufzeit und ein Triangulationsverfahren als weiteres optisches Verfahren zur Entfernungsmessung. Dabei sind jedoch keine SPADs vorgesehen und keine Maßnahmen getroffen, um mit deren Besonderheiten umzugehen.

Die EP 2 159 603 B1 diskutiert einen hintergrundausblendenden Lichttaster, der Lichtpulse aussendet und die Empfangssignale über verschiedene Zeitfenster integriert.

Auch hierfür werden keine SPADs verwendet, und für derartige Integrationen würden sich deren praktisch binäre Signale mit Maximalausschlag nach Registrieren von Photonen auch nicht eignen.

In der DE 10 2004 042 466 A1 wird eine optische Distanzmessung mit einem Phasenverfahren vorgestellt. Es wird ein zusätzlicher Empfangspfad für ein Triangulationsverfahren geschaffen, was aber erheblichen apparativen Mehraufwand bedeutet.

Die US 2017/0097417 A1 offenbart einen entfernungsmessenden Sensor, der ein Lichtlaufzeitverfahren mit einem Triangulationsverfahren kombiniert. Dabei wird Licht gepulst und flächenförmig ausgesandt und mit einem Matrixsensor wieder empfangen. Licht von einem fernen Objekt fällt auf eine am Rand gelegene Pixelzeile des Matrixsensors und wird dort mittels Lichtlaufzeitverfahren ausgewertet. Licht von einem näheren Objekt trifft abstandsabhängig andere Pixelzeilen, und dies wird dann mittels Triangulation ausgewertet.

Aus der US 2018/0209846 A1 ist ein SPAD-Detektor mit modulierter Empfindlichkeit bekannt. Dabei werden Lichtlaufzeitmessungen wiederholt, und es wird für die jeweiligen Pixel eine Verteilung der Lichtlaufzeiten in einem Histogramm erfasst.

Die US 8 188 418 B1 beschreibt einen schaltbaren hybriden Empfänger für kohärente und direkte optische Erfassung. Der Detektor wird mittels Vorspannung für die kohärente Erfassung in einem unempfindlichen Modus und für die direkte Erfassung in einen empfindlichen Modus geschaltet.

Aus der EP 2 711 667 A1 ist eine Vorrichtung zur Entfernungsmessung bekannt, die eine Photodiode für eine Lichtlaufzeitmessung und ein ein- oder zweidimensionales Photodiodenarray für eine Triangulationsmessung aufweist. Damit werden zwei Betriebsmodi ermöglicht, um im Fernbereich die Lichtlaufzeitmessung und im Nahbereich die Triangulationsmessung einsetzen zu können. In einer Ausführungsform wird nur ein einziger Empfangssensor in Form eines Photodiodenarrays verwendet, und im Betriebsmodus für Lichtlaufzeitmessung wird eine einzelne Photodiode oder eine Gruppe von Photodioden innerhalb des Photodiodenarrays verwendet.

Es ist daher Aufgabe der Erfindung, einen verbesserten optoelektronischen Sensor zur Erfassung von Informationen über ein Objekt und insbesondere zur Abstandsmessung anzugeben.

Diese Aufgabe wird durch einen optoelektronischen Sensor und ein Verfahren zur Erfassung eines Objekts in einem Überwachungsbereich nach Anspruch 1 beziehungsweise 13 gelöst. Ein Lichtsender sendet ein Lichtsignal in den Überwachungsbereich aus, der von dem Objekt zumindest teilweise zurückgeworfen wird. Bei Messung einer Lichtlaufzeit ist dem Lichtsignal ein Puls aufmoduliert, in anderen Phasen kann beispielsweise auch Gleichlicht oder eine Codierung ausgesandt werden. Ein Lichtempfänger erfasst das Empfangslicht, in dem sich das zurückkehrende Lichtsignal und sonstiges Licht überlagern. Der Lichtempfänger weist eine Vielzahl von Photodiodenelemente oder Pixeln auf, die zu einer Zeile, mehreren Zeilen oder einer Matrix mit in beiden Richtungen ähnlicher Pixelauflösung angeordnet sind. Eine Steuer- und Auswertungseinheit ist in der Lage, die Lichtlaufzeit mit Hilfe der Empfangssignale der Photodiodenelemente zu messen und daraus über die konstante Lichtgeschwindigkeit den Abstand zu dem Objekt zu bestimmen. Außerdem kann sie aus der Intensität der Empfangssignale weitere Messinformationen gewinnen, beispielsweise eine mittels Bildauswertung zugängliche Messinformation oder nochmals der Abstand mit einem anderen Verfahren wie Triangulation. An den Photodiodenelementen kann eine veränderliche Vorspannung angelegt werden. Je nach Komplexität der Verschaltung werden die Photodiodenelemente gemeinsam, einzeln oder beispielsweise auch gruppenweise mit der Vorspannung versorgt, die dann gegebenenfalls über den Lichtempfänger auch unterschiedliche Werte annehmen kann.

Die Erfindung geht von dem Grundgedanken aus, Photodiodenelemente über die Vorspannung in unterschiedliche Modi zu versetzen. Dabei sind ein SPAD-Modus, ein APD-Modus und ein linearer PD-Modus vorgesehen, wobei vorzugsweise alle drei Modi wählbar sind, ansonsten zumindest der SPAD-Modus und einer der beiden anderen Modi. Im SPAD-Modus wird eine Vorspannung oberhalb der Durchbruchspannung angelegt, das entsprechende Photodiodenelement also im einleitend beschriebenen Geiger-Modus betrieben. Im APD-Modus liegt die Vorspannung unter der Durchbruchspannung, so dass nicht mehr Einzelphotonen detektiert und kontrollierte Lawinendurchbrüche erzeugt werden. Der Name PD-Modus ist etwas missverständlich, da immer ein Photodiodenelement verwendet ist, und wird deshalb meist, aber nicht überall mit dem Zusatz linearer PD-Modus versehen. In dem PD-Modus arbeiten die Empfangspixel bei geringer oder keiner Vorspannung als herkömmliche Photodioden, ohne dass es zu kontrollierten oder unkontrollierten Lawinendurchbrüchen kommt. Die jeweilige Umschaltung betrifft einzelne oder mehrere Photodiodenelemente, eine Gruppe oder mehrere Gruppen oder alle Photodiodenelemente, was mit der oben erläuterten Verschaltung zum Anlegen einer gemeinsamen Vorspannung oder unterschiedlicher Vorspannungen korrespondiert. Prinzipiell können also Photodiodenelemente in unterschiedlichen Modi arbeiten oder nur alle gemeinsam den Modus wechseln.

Die Erfindung hat den Vorteil, dass je nach Messsituation ein geeigneter Modus genutzt oder dass Messinformation aus verschiedenen Modi kombiniert werden kann. Im SPAD-Modus wird eine besonders hohe Empfindlichkeit mit Verstärkungsfaktoren von bis zu $10^8$ erreicht. Der lineare PD-Modus ermöglicht die Erfassung von fein abgestuften Analoginformationen und Bilddaten. Der APD-Modus steht nicht nur hinsichtlich der benötigten Vorspannung dazwischen. Er bietet einerseits schon gegenüber dem linearen PD-Modus eine ordentliche Verstärkung, erlaubt aber im Gegensatz zu der binären Erfassung des SPAD-Modus auch noch die Erfassung linearer Messinformation, wie eines analogen Pulsverlaufs. Damit ist eine besonders verlässliche Abstandsmessung über einen großen Abstands- und Dynamikbereich möglich, und über die Intensität insbesondere in Form von Bilddaten können weitere Auswertungen erfolgen. Die Robustheit und Leistungsfähigkeit der Messung wird gesteigert. Herkömmlich erfordert eine derartige Kombination den Einsatz mehrerer Lichtempfänger samt Empfangsoptik, die dann eine Parallaxe zueinander aufweisen und hochgenau auf einen gemeinsamen Sichtbereich justiert werden müssen. Auch der unterschiedliche Temperaturgang kann zu Problemen führen. Erfindungsgemäß hingegen erfolgt die Messung kostengünstig mit demselben System, das somit auch unmittelbar den exakt gleichen Blickwinkel und das gleiche Sichtfeld aufweist.

Die Photodiodenelemente sind bevorzugt mit mehreren Auswertungsschaltungen jeweils für den SPAD-Modus, den APD-Modus oder den linearen PD-Modus verbunden. Es sind also zumindest zwei, wenn nicht drei unterschiedliche Auswertungsschaltungen für die verschiedenen Modi vorgesehen. Der APD- und der PD-Modus können unter Umständen zumindest teilweise dieselben Auswertungsschaltungen nutzen, ähnlich auch der APD-Modus und der SPAD-Modus, wo dann kontrollierte und unkontrollierte Lawinendurchbrüche in einer gleichen Weise verarbeitet werden. Die Auswertungsschaltungen betreffen bevorzugt eine analoge Vorverarbeitung. Die eigentliche Auswertung erfolgt dann digital, wobei dann entsprechende Funktionsblöcke für die jeweiligen Modi vorgesehen sind. Solche Funktionsblöcke können programmiert sein, beispielsweise auf einem FPGA (Field Programmable Gate Array) oder Mikroprozessor, oder es handelt sich um feste digitale Schaltungen auf einem ASIC (Application-Specific Integrated Circuit). Die Auswertungsschaltungen können einfach vorhanden sein und zusammengeführte Empfangssignale summarisch verarbeiten, oder sie sind vielfach für Gruppen von Photodiodenelementen oder sogar einzelne Photodiodenelemente vorgesehen.

Eine erste Auswertungsschaltung weist bevorzugt ein Verstärkerelement und/oder einen A/D-Wandler zur Gewinnung einer Intensität für den APD-Modus oder den linearen PD-Modus auf. Auf diese Weise werden Intensitätsinformationen gewonnen, die dann digital weiterverarbeitet werden.

Die erste Auswertungsschaltung weist bevorzugt ein Komparatorelement für eine Schwellenbewertung auf. Damit lässt sich beispielsweise ein Empfangszeitpunkt eines Lichtpulses bestimmen, wobei vorzugsweise auch mehrere Schwellen vorgesehen sind, um den Puls genauer zu erfassen. Zusätzliche Elemente der ersten Auswertungsschaltung sind vorstellbar, beispielsweise ein Filterelement wie ein Bandpassfilter, das einen Empfangspuls in eine Schwingung wandelt.

Eine zweite Auswertungsschaltung weist bevorzugt eine Lichtlaufzeitmesseinrichtung für den SPAD-Modus auf. Der Zeitverlauf eines SPAD-Ereignisses enthält wegen des prinzipiell immer gleichen unkontrollierten Lawinendurchbruchs keine wertvolle Messinformation, die vielmehr im Zeitpunkt des Ereignisses liegt. Dieser Zeitpunkt, festgemacht beispielsweise an der steigenden Flanke bei einem Lawinenereignis, wird insbesondere als Zeitdauer seit Aussenden eines Lichtpulses gemessen. Dafür eignet sich ein TDC (Time-to-Digital-Converter) als Lichtlaufzeitmesseinrichtung. Das sind bewährte Bauteile, um Zeitmessungen durchzuführen und die praktisch als Stoppuhren arbeiten, die durch einen gemeinsamen Zeitbezug wie dem Sendezeitpunkt des Lichtsignals starten und durch die Photodiodenelemente im SPAD-Modus angehalten werden, oder die umgekehrt durch die Photodiodenelemente starten und bei einem festgelegten gemeinsamen Zeitbezug angehalten werden. Vorzugsweise sind die TDCs direkt bei den Pixeln oder Lichtempfangselementen oder zumindest auf demselben Chip implementiert. Die zweiten Auswertungsschaltungen können auch im APD-Modus für eine Lichtlaufzeitmessung mittels dessen schwächerer, kontrollierter Lawinenereignisse genutzt werden.

Die Steuer- und Auswertungseinheit ist dafür ausgebildet, für eine Abstandsmessung mittels Lichtlaufzeitverfahren in den SPAD-Modus zu schalten.

Da die Photodiodenelemente im SPAD-Modus einige besondere Eigenschaften aufweisen, vor allem auch durch Störlichtphotonen in gleicher Weise auslösen wie bei Nutzlichtempfang, und das zu beliebigen Zeiten mit anschließender Totzeit, wird vorzugsweise mehrfach gemessen. Mehrfachmessungen erfolgen durch Messwiederholung und/oder indem Ereignisse aus mehreren Photodiodenelementen ausgewertet werden. Für eine statistische Auswertung werden die jeweils einzeln gemessenen Lichtlaufzeiten in einem Histogramm kumuliert, wobei Histogramme über einzelne Photodiodenelemente, Gruppen von Photodiodenelementen oder sämtliche Photodiodenelemente denkbar sind. Ein derartiges Histogramm unterteilt den interessierenden Lichtlaufzeitbereich von Null bis zur maximalen Reichweite oder einen Teilbereich davon in vorzugsweise gleichmäßige Bins und zählt, wie oft eine jeweils in das Bin fallende Lichtlaufzeit gemessen wurde. Aus dem Histogramm kann eine Lichtlaufzeit mit deutlich größerer Robustheit und Genauigkeit bestimmt werden als aus Einzelereignis.

Die Steuer- und Auswertungseinheit ist bevorzugt dafür ausgebildet, für eine Messung der Intensität, insbesondere eine Bildaufnahme, in den linearen PD-Modus zu schalten, Der SPAD-Modus bietet nämlich zumindest direkt überhaupt keinen Zugang zu derartigen Informationen, da die ursprüngliche Intensität des einfallenden Empfangslichts in dem unkontrollierten Lawinendurchbruch verloren geht. Zwar lässt sich dies durch statistische Verfahren und die immer noch intensitätsabhängige Auslösewahrscheinlichkeit in gewissem Rahmen wieder rekonstruieren, aber der PD-Modus gewinnt diese Intensitätsinformationen am schnellsten und besten. Im APD-Modus bleibt zumindest eine gewisse Intensitätsinformation zugänglich, dafür ist die Empfindlichkeit im Vergleich zum SPAD-Modus geringer.

Die Steuer- und Auswertungseinheit ist dafür ausgebildet, für eine Abstandsbestimmung mittels Triangulation in den APD-Modus oder den linearen PD-Modus zu schalten. Für eine Triangulationsmessung ist im ersten Schritt der diskrete Auftreffort eines Empfangslichtflecks zu bestimmen. Der gesuchte Abstand lässt sich dann anhand der bekannten Sensorparameter, insbesondere dem Basisabstand zwischen Lichtsender und Lichtempfänger beziehungsweise deren zugeordnete Optiken bestimmen. Für eine genaue Triangulation muss darüber hinaus anhand der Intensitätsverhältnisse eine subpixelgenaue Lokalisierung erfolgen. Das gelingt umso besser, je genauer die Intensitäten erfasst sind.

Die Steuer- und Auswertungseinheit ist bevorzugt dafür ausgebildet, für eine nachfolgende Betriebsphase einen Modus festzulegen. Das ist also zumindest für eine gewisse Betriebsdauer eine einmalige Wahl eines optimalen Modus. Kriterien können vorausgehende Messungen, aber auch eine Parametrierung sein.

Die Steuer- und Auswertungseinheit ist bevorzugt dafür ausgebildet, zunächst für eine Vormessung in einen Modus und anschließend für eine Hauptmessung in einen anderen Modus zu schalten. Hier wird jeweils für jede eigentliche Messung oder Hauptmessung in einer vorgeschalteten Vormessung der geeignete Modus bestimmt.

Die Steuer- und Auswertungseinheit ist bevorzugt dafür ausgebildet, zunächst einen groben Abstandswert zu bestimmen und dann bei einem Abstandswert kleiner einer Abstandsschwelle in den linearen PD-Modus oder den APD-Modus für eine Triangulationsmessung und bei einem Abstandswert größer der Abstandsschwelle in den SPAD-Modus für eine Lichtlaufzeitmessung zu schalten. Die anfängliche Bestimmung eines Abstandswerts kann mit irgendeinem Modus erfolgen, oder es ist eine äußere Vorgabe beispielsweise durch einen angeschlossenen weiteren Sensor, einer übergeordneten Steuerung oder eines Bedieners. Für kleinere Entfernungen wird dann mit Triangulation, für größere Entfernungen mit Lichtlaufzeitverfahren gemessen und dafür der geeignete Modus eingestellt, nämlich der PD-Modus oder gegebenenfalls der APD-Modus für die Triangulation und der SPAD-Modus für das Lichtlaufzeitverfahren. Das Kriterium, was noch eine kleinere Entfernung beziehungsweise schon eine größere Entfernung ist, wird durch eine Abstandsschwelle am Übergangspunkt vorgegeben.

Der Begründung für dieses vorteilhafte Vorgehen ist, dass im Nahbereich eine Abstandsänderung eine besonders große, im Fernbereich nur noch eine geringfügige Veränderung des Auftreffpunkts des Empfangslichtflecks ergibt. Umgekehrt ist mit einem Lichtlaufzeitverfahren zwar nah wie fern eine ähnliche Präzision erreichbar, diese aber durch die extrem kurzen zu erfassenden Zeitunterschiede begrenzt. Daher eignet sich die Messung mittels Triangulation besonders im Nahbereich und mittels Lichtlaufzeit besonders im Fernbereich. Der Übergangspunkt lässt sich vorab ermitteln. Es ist auch denkbar, beide Abstandsmessungen entsprechend gewichtet miteinander zu verrechnen, also statt eines harten Umschaltpunkts einen weichen Übergang zu schaffen.

Die Steuer- und Auswertungseinheit ist bevorzugt dafür ausgebildet, zunächst eine Lichtlaufzeitmessung im SPAD-Modus durchzuführen und bei Erkennung einer Kante in den linearen PD-Modus für eine Bildaufnahme umzuschalten. Dies ist ein weiteres Anwendungsbeispiel für eine Vor- und eine Hauptmessung. In diesem Fall dient die Lichtlaufzeitmessung im SPAD-Modus praktisch als Trigger, der auf ein Objekt in einem bestimmten Abstand reagiert, also eine Kante gegenüber dem ohne das Objekt betrachteten Hintergrund. Nach dem Trigger wird dann eine Bildaufnahme des Objekts erzeugt, um damit weitere Auswertungen vorzunehmen, wobei hier die volle Bandbreite von Bildauswertungen einschließlich Codelesen, Texterkennung (OCR, Optical Character Reading) und Markenerkennung in Frage kommt. Der zum Objekt gemessene Abstand kann auch genutzt werden, eine Empfangsoptik für die Bildaufnahme zu fokussieren.

Die Steuer- und Auswertungseinheit ist bevorzugt dafür ausgebildet, zwischen mehreren Modi zu wechseln, insbesondere zyklisch, und die dabei jeweils erfassten Empfangssignale gemeinsam auszuwerten. Hier wird nicht mehr gezielt ein passender Modus verwendet, sondern es werden Informationen in mehreren Modi zusammengetragen, und nachgelagert wird entschieden, welche dieser Informationen ausgewertet werden, oder die Informationen werden miteinander verrechnet.

Die Steuer- und Auswertungseinheit ist bevorzugt dafür ausgebildet, einen Abstand sowohl mittels Triangulation im linearen PD-Modus und/oder im APD-Modus als auch mittels Lichtlaufzeitverfahren im SPAD-Modus zu bestimmen und die gemessenen Abstände miteinander zu verrechnen und/oder gegenseitig zu plausibilisieren. In dieser Ausführungsform wird ein Abstand diversitär mit den zwei unterschiedlichen Verfahren Lichtlaufzeit und Triangulation gemessen. Das führt zu verlässlicheren und genaueren Ergebnissen. Insbesondere im Bereich der Sicherheitstechnik, in dem der Sensor beispielsweise eine gefährliche Maschine überwacht und bei Eingriff eines Körperteils absichert, tragen solche diversitär-redundanten Messungen zu der erforderlichen Fehlersicherheit beziehungsweise Fehleraufdeckung bei.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Blockdarstellung eines optoelektronischen Sensors;

Fig. 2    eine schematische Darstellung mehrerer Auswertungsschaltungen für ein Empfangspixel in drei unterschiedlichen Modi;

Fig. 3    eine Übersicht der Eigenschaften einer Photodiode in den drei Modi anhand einer Strom-Spannungs-Kennlinie;

Fig. 4    ein beispielhaftes Histogramm, das die Häufigkeiten der gemessenen Lichtlaufzeiten in Messwiederholungen und/oder mehreren im SPAD-Modus betriebenen Empfangspixeln akkumuliert;

Fig. 5    eine Darstellung einer Empfängerzeile mit für jedes von deren Empfangspixeln erzeugten Histogrammen;

Fig. 6    eine vergleichende Darstellung der Auflösung von Lichtlaufzeit- und Triangulationsverfahren im Nah- und Fernbereich;

Fig. 7    ein Ablaufschema für eine bespielhafte Messung mit vorgelagerter Kantenerkennung im SPAD-Modus und anschließender Bildaufnahme im PD-Modus; und

Fig. 8    ein Ablaufschema für eine weitere beispielhafte Messung, die zwischen SPAD-Modus, PD-Modus und APD-Modus wechselt.

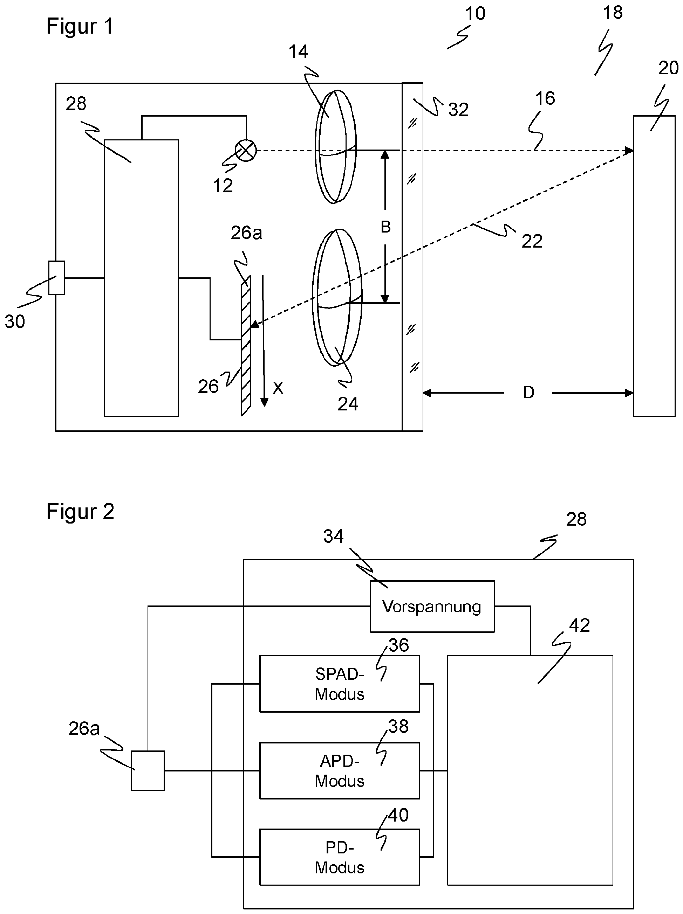

Figur 1 zeigt eine vereinfachte schematische Blockdarstellung eines optoelektronischen Sensors 10 in einer Ausführungsform als Lichttaster. Ein Lichtsender 12, beispielsweise eine LED oder eine Laserlichtquelle in Form eines Kantenemitters oder einer VCSEL, sendet durch eine Sendeoptik 14 ein Lichtsignal, insbesondere einen Lichtpuls 16 in einen Überwachungsbereich 18 aus. Der Lichtsender 12 und die Sendeoptik 14 erzeugen einen runden oder einen länglichen Strahlquerschnitt, wobei im Falle eines länglichen Strahlquerschnitts die Längsrichtung vorzugsweise senkrecht zur Papierebene liegt.

Trifft der Lichtpuls 16 auf ein Objekt 20, so wird ein Teil des Lichtpulses 16 remittiert oder reflektiert und kehrt als remittierter Lichtpuls 22 durch eine Empfangsoptik 24 zu einem Lichtempfänger 26 zurück. Sendeoptik 14 und Empfangsoptik 24 sind im Basisabstand B zueinander angeordnet. Der Lichtempfänger 26 weist eine Vielzahl von Lichtempfangselementen 26a auf, die zu einer Zeile, mehreren Zeilen oder einer Matrix angeordnet sind, wobei mit X die Richtung längs einer Zeile auf der Verbindungslinie von Lichtsender 12 und Lichtempfänger 26 bezeichnet ist. Der Lichtempfänger 26 kann insbesondere in der Scheimpflug-Anordnung ausgerichtet sein. Die Lichtempfangselemente 26a sind Photodioden, die in einer noch zu beschreibenden Weise in unterschiedlichen Modi betrieben werden können.

Die Empfangssignale der Lichtempfangselemente 26a werden von einer Steuer- und Auswertungseinheit 28 ausgelesen und dort ausgewertet, um den Abstand D zu dem Objekt 20 zu messen beziehungsweise sonstige Messinformationen über das Objekt 20 zu gewinnen. Für die Abstandsmessung kann die Steuer- und Auswertungseinheit 28 ein Lichtlaufzeitverfahren verwenden, in dem die Lichtlaufzeit vom Aussenden des Lichtpulses 16 bis zum Empfang des remittierten Lichtpulses 22 ermittelt und bei Bedarf über die Lichtgeschwindigkeit in den Abstand D umgerechnet wird. In einer alternativen oder zusätzlichen Abstandsmessung wird der Auftreffort des remittierten Lichtpulses 22 beziehungsweise des davon erzeugten Empfangslichtflecks auf dem Lichtempfänger 26 und daraus mittels Triangulation der Abstand D bestimmt.

Je nach Ausführungsform des Sensors 10 werden an einem Ausgang 30 die mittels Lichtlaufzeitverfahren und/oder Triangulationsverfahren bestimmte Abstände, ein daraus berechneter resultierender Abstand, ein binäres Schaltsignal je nach An- oder Abwesenheit des Objektes 20 in einem bestimmten Abstandsbereich und/oder eine sonstige Messinformation ausgegeben. Der Sensor 10 ist also insbesondere als messendes oder als binär Objekte 20 detektierendes System ausgebildet.

Der Sensor 10 weist in einer praktischen Ausführungsform weitere Elemente auf, die hier vereinfachend nicht weiter beschrieben werden, wie weitere Schnittstellen zur Parametrierung und dergleichen. Die Auftrennung in Lichtempfänger 26 und Steuer- und Auswertungseinheit 28 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lichtempfangselemente 26a und einzelne oder Gruppen von Lichtempfangselementen 26a zugeordnete Schaltkreise zu deren Auswertung und Ansteuerung teilen. Sämtliche Bauteile können kompakt in einem Sensor 10 und insbesondere in einem Gehäuse untergebracht werden, das im Durchtrittsbereich der Lichtpulse 16, 22 durch eine Frontscheibe 32 abgeschlossen ist. In Figur 1 ist die Außenfläche der Frontscheibe 32 der Bezugspunkt für den gemessenen Abstand D, hier lässt sich natürlich auch durch entsprechende Umrechnung ein anderer Nullpunkt definieren.

Der Grundaufbau gemäß Figur 1 ist nur schematisch und beispielhaft zu verstehen. Es gibt auch andere erfindungsgemäße Ausführungsformen optoelektronischer Sensoren, die insbesondere jedem von Triangulationstastern oder hintergrundausblendenden Lichttastern an sich bekannten Aufbau entsprechen können. Weiter denkbar sind Laserscanner, in denen ein optischer Messkopf entsprechend Figur 1 rotiert oder verschwenkt wird.

Figur 2 zeigt ein beispielhaftes einzelnes Lichtempfangselement 26a und dessen Verschaltung mit der Steuer- und Auswertungseinheit 28. Diese Verschaltungen sind je nach Ausführungsform für jedes Lichtempfangselement 26a einzeln oder für Gruppen von beziehungsweise sämtliche Lichtempfangselemente 26a gemeinsam vorgesehen. Mithilfe einer Vorspannungseinheit 34 kann die Steuer- und Auswertungseinheit 28 unterschiedliche Vorspannungen an das Lichtempfangselement 26a anlegen und dadurch die Photodiode in unterschiedlichen Modi oder Arbeitsbereichen betreiben. Für die jeweiligen Modi sind spezifische Auswertungsschaltungen für einen SPAD-Modus 36, für einen APD-Modus 38 und für einen linearen PD-Modus 40 vorgesehen, wobei nicht ausgeschlossen ist, dass in anderen Ausführungsformen abweichend von der Darstellung zumindest Teile der Auswertungsschaltungen in einem Modus gemeinsam genutzt werden und daher auch nur weniger Auswertungsschaltungen als Modi vorgesehen sein können. Den Auswertungsschaltungen 36, 38, 40 nachgeordnet ist eine weitere Auswertung 42, die vorzugsweise digital erfolgt und abweichend von der Darstellung auch Funktionsblöcke aufweisen kann, die bestimmten Modi zugeordnet sind.

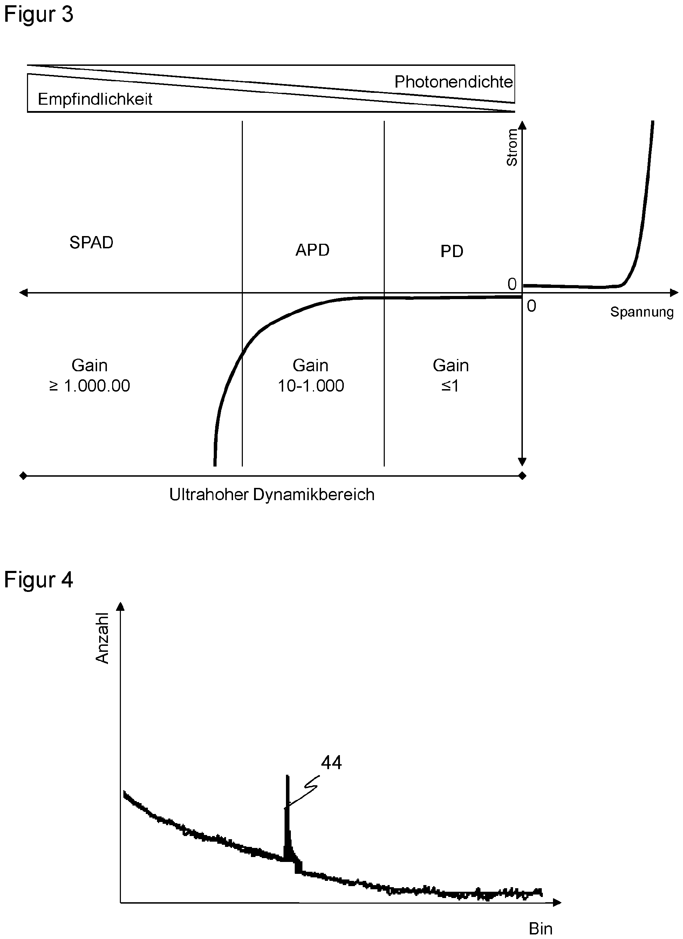

Die Eigenschaften einer Photodiode in den drei Modi werden in Figur 3 anhand einer Strom-Spannungs-Kennlinie illustriert. Dabei ist der rechte Teil der Kennlinie mit positiver Spannung für die Praxis nicht relevant, wobei das Vorzeichen natürlich eine Konvention ist. Bei geringer negativer Vorspannung arbeitet die Photodiode im linearen PD-Modus mit keiner Verstärkung oder sogar Verlusten, wobei dies die intrinsische Verstärkung der Photodiode selbst ist. Dies ist der typische Betriebsmodus in einem Bildsensor zur Gewinnung einer analogen Helligkeits- oder Intensitätsinformation. Bei betragsmäßig höherer Vorspannung, jedoch noch unterhalb der Durchbruchspannung liegt der Arbeitsbereich im APD-Modus, in dem Empfangslicht einen kontrollierten Lawinendurchbruch auslöst. Dabei wird schon eine Verstärkung mit einem Gain-Faktor von 10-1.000 erreicht. Außerdem bleibt eine analoge Information über die Intensität zugänglich, beispielsweise eine Pulsform. Bei einer Vorspannung jenseits der Durchbruchspannung beginnt der Geigermodus (SPAD, Single Photon Avalanche Diode), in dem bereits ein einzelnes Empfangsphoton einen unkontrollierten Lawinendurchbruch auslösen kann, der sämtliche verfügbaren Ladungsträger rekrutiert. Hier werden Gain-Faktoren von $10^6$ und mehr erreicht. Die Information ist aber binär oder digital, d. h. es wird eine Lawine ausgelöst oder nicht, eine analoge Intensitätsinformation des auslösenden Empfangslichts lässt sich der Lawine nicht mehr entnehmen. Über alle drei Modi ergibt sich ein besonders großer, ultrahoher Dynamikbereich. Im oberen Teil der Figur 3 ist noch das gegenläufige Verhalten hinsichtlich Empfindlichkeit und Photonendichte skizziert.

Zurück zu Figur 2, lässt sich demnach durch Anlegen einer geeigneten Vorspannung mittels der Vorspannungseinheit 34 ein zur aktuellen Messanforderung passender oder optimaler Modus auswählen, oder es können nacheinander oder bereichsweise verschiedene Modi miteinander kombiniert werden. Dazu passend sind die jeweiligen Auswertungsschaltungen 36, 38, 40 ausgelegt.

Die Auswertungsschaltung für den SPAD-Modus 36 umfasst vorzugsweise eine Lichtlaufzeitmesseinheit, insbesondere einen TDC (Time-to-Digital Converter). Ein Lawinenereignis in einem verbundenen Lichtempfangselement 26a stoppt den TDC. Damit wird die Zeit ab einem vorgegebenen Trigger gemessen, beispielsweise dem Sendezeitpunkt des Lichtpulses 16. Alternativ starten die Lichtempfangselemente 26a den TDC, der mit einem Trigger zu einem festen Bezugszeitpunkt wieder stoppt. Konstante Zeiten können anschließend herausgerechnet werden, um D auf einen bestimmten Ort wie die Frontscheibe 32 zu beziehen.

Die Auswertungsschaltung für den PD-Modus 40 umfassen beispielsweise einen Verstärker, einen A/D-Wandler beziehungsweise Filterelemente. Damit wird die Intensität erfasst, über die Anordnung der Lichtempfangselemente 26a hinweg ein Helligkeits- oder Grauwertbild. Damit können beliebige Bildauswertungen vorgenommen werden, wie Kantenerkennung, Objektsegmentierung, aber auch Barcodelesung oder dergleichen. In einer bevorzugten Anwendung wird der Auftreffort eines Empfangslichtflecks des Lichtpulses 16 bestimmt und damit der Abstand D trianguliert.

Die Auswertungsschaltung für den APD-Modus 38 können alle genannten Elemente umfassen. Der APD-Modus ist in gewisser Weise ein Kompromiss zwischen den beiden anderen Modi mit schon recht guter Verstärkung, aber noch zugänglicher Analoginformation. Deshalb ist prinzipiell auch denkbar, dass die Auswertungsschaltung für den APD-Modus 38 Elemente der anderen Auswertungsschaltungen 36, 40 zumindest teilweise mit nutzt und möglicherweise als eigene Schaltungsanordnung entfällt.

Durch die Umschaltung zwischen den Modi ist ein sequentieller, anwendungsbezogener adaptiver Betrieb möglich. Dadurch ergänzen die jeweiligen Stärken einander, das Anwendungsfeld wird größer und flexibler, und es wird eine höhere Verlässlichkeit auch im Sinne funktionaler Sicherheit erreichbar. Es können ein und dieselben Lichtempfangselemente 26a für verschiedene Erfassungen und Auswertungen verwendet werden, insbesondere für Distanzmessung und Bildaufnahme.

Figur 4 zeigt ein beispielhaftes Histogramm von Lichtlaufzeiten, die über eine Vielzahl von Messwiederholungen und/oder Lichtempfangselemente 26a im SPAD-Modus beispielsweise mittels eines TDC gesammelt wurden. Auf der X-Achse sind die Bins aufgetragen, was einer Diskretisierung der Zeitachse entspricht. Auf der Y-Achse werden einzelne gemessene Lichtlaufzeiten je Bin gezählt. Jedes in dem Histogramm gezählte Ereignis ist also eine einzelne gemessene Lichtlaufzeit. Das darf nicht mit der Lichtlaufzeit verwechselt werden, die insgesamt von dem Sensor 10 gemessen wird, um den Abstand D zu bestimmen und ein Ergebnis der Histogrammauswertung ist.

Das Histogramm zeigt den für SPADs typischen unterliegenden, exponentiell abfallenden Hintergrund, der außerdem in sich verrauscht ist. Dieses Verhalten resultiert aus den Totzeiten: Wird eine SPAD ausgelöst, sei es durch ein Dunkelereignis, durch Hintergrundlicht oder durch Nutzlicht des remittierten Lichtpulses 22, so steht sie für die weitere Einzelmessung nicht mehr zur Verfügung (Pile-Up-Effekt). Das gesuchte Messergebnis ist das lokale Maximum 44, wo sich die aus dem Nutzlicht gemessenen einzelnen Lichtlaufzeiten häufen, oder vielmehr dessen Bin oder zeitliche Lage, die dem Empfangszeitpunkt des Lichtpulses entspricht. Hinter dem lokalen Maximum 44 gibt es einen Sprung in der abfallenden Exponentialfunktion, weil eine größere Teilpopulation der SPADs durch den Echopeak in die Totzeit versetzt wird. Es ist durchaus vorstellbar, dass das lokale Maximum 44 kleiner ausfällt als der Hintergrund am Anfang des Histogramms, weil beim Eintreffen des remittierten Lichtpulses 22 bei stärkerer Hintergrundbelastung längst nicht mehr alle Lichtempfangselemente 26a zur Verfügung stehen.

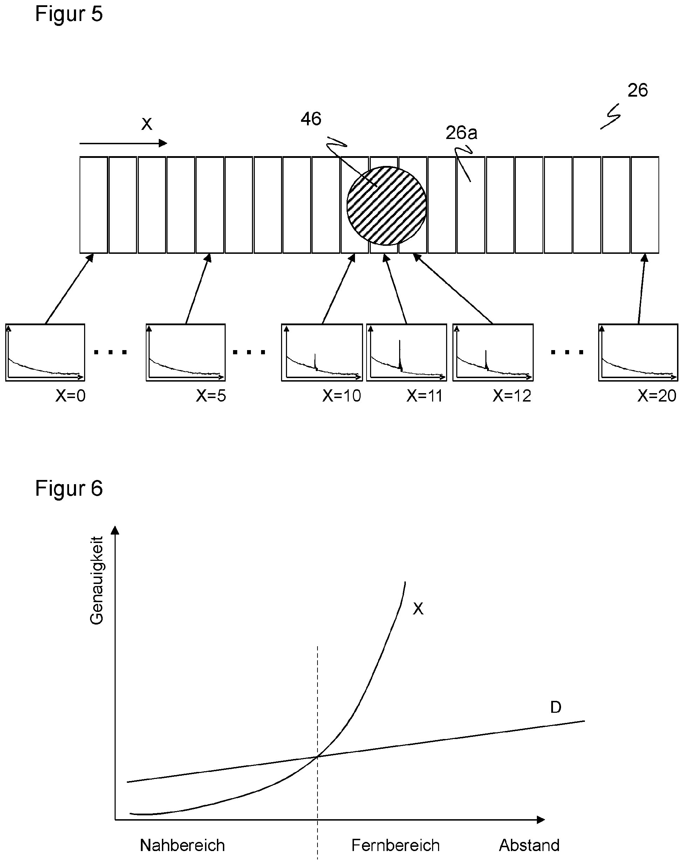

Figur 5 zeigt den Lichtempfänger 26 in einer Draufsicht als Zeilenanordnung von Lichtempfangselementen 26a. Die einzelnen Lichtempfangselemente 26a sind in Spaltenrichtung langgezogen. Das entspricht einer vorteilhaften Ausführungsform, in der eigentlich mehrere hier nicht dargestellte Zeilen von Lichtempfangselementen 26a vorgesehen sind, die in Spaltenrichtung gemeinsam ausgewertet werden. Dadurch stehen im SPAD-Modus an jeder Zeilenposition mehrere SPADs zur Verfügung, so dass ein Störlichtereignis nicht so stark ins Gewicht fällt.

In Figur 5 wird je ein Histogramm pro Lichtempfangselement 26a erzeugt. Das ist unterhalb des Lichtempfängers 26 für einige der Lichtempfangselemente 26a durch das jeweils zu dem Lichtempfangselement 26a gehörige Histogramm in einer verkleinerten Darstellung entsprechend der zuvor erläuterten Figur 4 illustriert. Dabei bezeichnet weiterhin X die Richtung der Basis wie in Figur 1, und dementsprechend sind die Histogramme nummeriert. Diese Nummer oder Identität des jeweiligen Histogramms enthält also die geometrische Information oder Ortsauflösung, wo in X-Richtung das Histogramm aufgezeichnet wurde.

In dem Beispiel der Figur 5 sind die Histogramme 10 bis 12 diejenigen, die Nutzlichtinformation des Empfangslichtflecks 46 enthalten. Die übrigen Histogramme zeigen nur Hintergrundlicht und werden vorzugsweise außer zu einer etwaigen Schätzung des Hintergrundes ignoriert. Die Einbeziehung ist auch denkbar, erhöht aber wesentlich den Rauschanteil. Jedes der Histogramme 10 bis 12 ermöglicht über die Lage des lokalen Maximums 44 eine robuste Lichtlaufzeitmessung, wobei die jeweiligen Schätzungen für D beispielsweise gemittelt werden können. Es ist auch möglich, die Einzelereignisse zu einem gemeinsamen Histogramm zusammenzufügen und dieses auszuwerten. Diese Lichtlaufzeitmessung ist die Funktion, für die sich der SPAD-Modus am besten eignet.

Die Identität der Histogramme mit Empfang von Nutzlicht, also deren Nummern 10 bis 12 im Beispiel der Figur 5, liefert zudem eine Information über den Auftreffort des Empfangslichtflecks 46 auf dem Lichtempfänger 26, die einer Triangulation zugrunde gelegt werden kann. Das Wandern des Empfangslichtflecks 46 in X-Richtung folgt in erster Näherung der Gleichung $x = \frac{F \cdot B}{TW}$, wobei X die Position auf dem Lichtempfänger 26, im Beispiel also X=11 des mittleren Histogramms mit lokalem Maximum 44, F die Brennweite der Empfangsoptik 24, B der Basisabstand zwischen Sendeoptik 14 und Empfangsoptik 24 und TW die gesuchte Tastweite, also der mittels Triangulation bestimmte Abstand ist.

Durch die Statistik über zahlreiche Messungen wird hier letztlich auf indirekte Weise doch noch eine Art Intensitätsinformation gewonnen, obwohl die Lichtempfangselemente 26a im SPAD-Modus originär nur die binäre Information eines Lawinenereignisses liefern. Die Triangulation ist aber auf diese Weise noch recht grob und auf die diskrete Auflösung der Lichtempfangselemente 26a beschränkt. Durch Umschaltung in den APD-Modus oder PD-Modus können fein aufgelöste Intensitäten je Lichtempfangselement 26a bestimmt werden. Das liefert dann eine entsprechend fein abgestufte Intensitätsverteilung des Empfangslichtflecks 46, mit der eine subpixelgenaue Lokalisierung des Schwerpunkts des Empfangslichtflecks 46 und damit eine hochgenaue Triangulation erreicht wird.

Figur 6 zeigt schematisch die Auflösung oder Genauigkeit der Abstandsmessung mittels Lichtlaufzeitverfahren (D) und mittels Triangulation (X) im Vergleich. Der genaue Verlauf ist von vielen Parametern abhängig, aber das prinzipielle Verhalten ist aus Figur 6 ablesbar. Die Änderung des Auftrefforts ist invers proportional zum Quadrat des Abstands des Objekts 20. Die Änderung ist damit bei nahen Objekten 20 groß und geht für größere Abstände zügig gegen Null. Triangulation ist also im Nahbereich genau, im Fernbereich nicht. Die entsprechende Änderung der Lichtlaufzeit bleibt dagegen für jeden Abstand proportional zur Änderung des Abstands. Allerdings ist die Genauigkeit nach dem aktuellen Stand der Technik auf mehrere Millimeter bis Zentimeter begrenzt, so dass Lichtlaufzeitmessung im Nahbereich nicht die Präzision der Triangulation erreicht.

Erfindungsgemäß stehen beide Abstandsinformationen zur Verfügung, und es kann die jeweils genauere verwendet werden, also die Triangulation im Nahbereich und die Lichtlaufzeit im Fernbereich. Dafür kann jeweils ein passender Modus der Lichtempfangselemente 26a eingestellt werden, nämlich der SPAD-Modus für das Lichtlaufzeitverfahren und der APD-Modus und/oder der PD-Modus für die Triangulation. In Figur 6 ist eine scharfe Grenze zwischen Nah- und Fernbereich eingezeichnet. Dieser Punkt kann für einen bestimmten Sensor 10 tatsächlich festgelegt sein, aber ebenso ist denkbar, einen weicheren Übergang zu schaffen, indem beide Abstandsinformationen geeignet mit dem Abstand gewichtet gemittelt werden

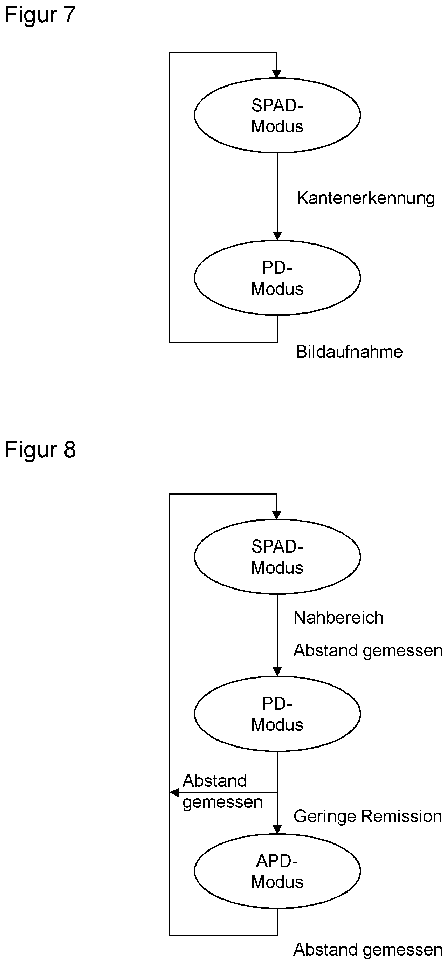

Figur 7 zeigt ein Ablaufschema für eine Ausführungsform einer Messung mit einer Vormessung und einer Hauptmessung in verschiedenen Modi. Ein konkretes Beispiel könnte das Erfassen von Barcodes, Adressen oder Marken auf Objekten 20 sein, die auf einem Förderband an dem fest montierten Sensor 10 vorbeigefördert werden. Zunächst wird im SPAD-Modus der Abstand gemessen, bis durch eine Kante, also ein Abstandssprung, ein Objekt 20 erfasst ist. Dieses wird dann, eventuell mit etwas Zeitversatz, der dem Objekt 20 die Möglichkeit gibt, vollständig ins Sichtfeld des Sensors 10 einzufahren, in den PD-Modus umgeschaltet und ein Bild aufgenommen. Mit diesem Bild können die an sich bekannten Bildauswertungsverfahren Informationen entsprechend der Anwendung erfassen, wie den Code oder die Adresse lesen oder die Marke identifizieren und lokalisieren. Die Abstandsmessung im SPAD-Modus dient hier als robuster, vom Remissionsverhalten der Objekte 20 zwischen schwarz und reflektierend unabhängiger Trigger für die Bildaufnahme im PD-Modus.

Figur 8 zeigt ein weiteres Ablaufschema für eine Ausführungsform mit einer Messung, die zwischen den drei Modi entweder zyklisch oder immer dann wechselt, wenn ein Modus die gewünschte Messinformation nicht erfasst.

So wird beispielsweise ein Abstand zu einem Objekt 20 im Grundzustand mittels Lichtlaufzeitverfahren im SPAD-Modus bei maximalem Gain von $10^6$ und mehr bestimmt. Entweder nach jeder Messung zur Ergänzung, oder wenn diese Messung einen Abstand im Nahbereich unterhalb eines bestimmten Grenzabstands wie ein Meter bestimmt hat, wird auf den PD-Modus umgeschaltet und der Abstand mittels Triangulation gemessen. Da hier der Gain bei <1 liegt, kann es sinnvoll sein, eine weitere Abstandsmessung erneut mittels Triangulation, nun aber im APD-Modus mit einem Gain von etwa 100 durchzuführen. Dadurch wird auch für Objekte 20 mit schwacher Remission eine zuverlässige Triangulation möglich. Das System kehrt dann entweder zyklisch oder wenn wieder ein Abstand jenseits des Nahbereichs gemessen wird in den SPAD-Modus zurück.

Auf diese Weise ergänzen sich die Stärken der jeweiligen Abstandsmessung, nämlich extrem hohe Empfindlichkeit und nur gleicher relativer Messfehler auch in großen Reichweiten bei Lichtlaufzeitmessung und höchste Präzision im Nahbereich bei Triangulation. Es wird beispielsweise im Nahbereich der Messwert der Triangulation und jenseits des Nahbereichs derjenige des Lichtlaufzeitverfahrens weiterverwendet, oder die Werte werden wie zu Figur 6 erläutert miteinander zu einem gemeinsamen Abstandswert verrechnet.

Ein solcher Ablauf, oder allgemein eine Abstandsmessung sowohl durch Lichtlaufzeitverfahren als auch Triangulation, ist auch für den sicherheitstechnischen Einsatz des Sensors 10 von Interesse. In der Sicherheitstechnik ist der Sensors 10 dafür eingesetzt, eine mögliche Gefahr zu detektieren, also beispielsweise wenn sich eine Person einer gefährlichen Maschine annähert. Wegen der Unfallgefahr sind hier sehr genau spezifizierte Anforderungen an Fehlersicherheit, Fehleraufdeckung und Ausfallsicherheit gestellt. Eine diversitär-redundante Abstandsmessung durch die Kombination von Lichtlaufzeit- und Triangulationsverfahren kann hierfür eine Basis bilden.

**Patentansprüche**

1. Optoelektronischer Sensor (10) zur Erfassung eines Objekts (10) in einem Überwachungsbereich (18), wobei der Sensor (10) einen Lichtsender (12) zum Aussenden eines Lichtsignals (16), einen Lichtempfänger (26) zum Empfangen von Empfangslicht (22) aus dem Überwachungsbereich (18) mit einer Vielzahl von Photodiodenelementen (26a) zur Erzeugung jeweiliger Empfangssignale sowie eine Steuer- und Auswertungseinheit (28) aufweist, die dafür ausgebildet ist, die Empfangssignale auszuwerten, um mit einem Lichtlaufzeitverfahren den Abstand zu dem Objekt (20) zu bestimmen sowie aus einer Intensität der Empfangssignale weitere Messinformationen zu gewinnen und eine Vorspannung an den Photodiodenelementen (26a) derart zu verändern, dass zumindest eines der Photodiodenelemente (26a) wahlweise in einem SPAD-Modus bei Vorspannung oberhalb einer Durchbruchspannung und somit in einem Geiger-Modus, in einem APD-Modus bei Vorspannung unterhalb der Durchbruchspannung bei kontrolliertem Lawinendurchbruch oder in einem linearen PD-Modus bei geringer oder ohne Vorspannung betrieben ist, wobei alle drei Modi oder der SPAD-Modus und einer der anderen beiden Modi wählbar sind,

**dadurch gekennzeichnet,**

**dass** die Steuer- und Auswertungseinheit (28) weiterhin dafür ausgebildet ist, für eine Abstandsmessung mittels Lichtlaufzeitverfahren in den SPAD-Modus und für eine Abstandsbestimmung mittels Triangulation in den APD-Modus oder den linearen PD-Modus zu schalten.

2. Sensor (10) nach Anspruch 1,
wobei die Photodiodenelemente (26a) mit mehreren Auswertungsschaltungen (36, 38, 40) jeweils für den SPAD-Modus (36), den APD-(38) Modus oder den linearen PD-Modus (40) verbunden sind.

3. Sensor (10) nach Anspruch 2,
wobei eine erste Auswertungsschaltung (40) ein Verstärkerelement und/oder einen A/D-Wandler zur Gewinnung einer Intensität für den APD-Modus oder den linearen PD-Modus aufweist.

4. Sensor (10) nach Anspruch 3,
wobei die erste Auswertungsschaltung (40) ein Komparatorelement für eine Schwellenbewertung aufweist.

5. Sensor (10) nach einem der Ansprüche 2 bis 4,
wobei eine zweite Auswertungsschaltung (36) eine Lichtlaufzeitmesseinrichtung für den SPAD-Modus aufweist.

6. Sensor (10) nach einem der vorhergehenden Ansprüche,
wobei die Steuer- und Auswertungseinheit (28) dafür ausgebildet ist, für eine Messung der Intensität, insbesondere eine Bildaufnahme, in den linearen PD-Modus zu schalten.

7. Sensor (10) nach einem der vorhergehenden Ansprüche,
wobei die Steuer- und Auswertungseinheit (28) dafür ausgebildet ist, für eine nachfolgende Betriebsphase einen Modus festzulegen.

8. Sensor (10) nach einem der vorhergehenden Ansprüche,
wobei die Steuer- und Auswertungseinheit (28) dafür ausgebildet ist, zunächst für eine Vormessung in einen Modus und anschließend für eine Hauptmessung in einen anderen Modus zu schalten.

9. Sensor (10) nach einem der vorhergehenden Ansprüche,

wobei die Steuer- und Auswertungseinheit (28) dafür ausgebildet ist, zunächst einen groben Abstandswert zu bestimmen und dann bei einem Abstandswert kleiner einer Abstandsschwelle in den linearen PD-Modus oder den APD-Modus für eine Triangulationsmessung und bei einem Abstandswert größer der Abstandsschwelle in den SPAD-Modus für eine Lichtlaufzeitmessung zu schalten.

10. Sensor (10) nach einem der vorhergehenden Ansprüche,
wobei die Steuer- und Auswertungseinheit (28) dafür ausgebildet ist, zunächst eine Lichtlaufzeitmessung im SPAD-Modus durchzuführen und bei Erkennung einer Kante in den linearen PD-Modus für eine Bildaufnahme umzuschalten.

11. Sensor (10) nach einem der vorhergehenden Ansprüche,
wobei die Steuer- und Auswertungseinheit (28) dafür ausgebildet ist, zwischen mehreren Modi zu wechseln, insbesondere zyklisch, und die dabei jeweils erfassten Empfangssignale gemeinsam auszuwerten.

12. Sensor (10) nach einem der vorhergehenden Ansprüche,
wobei die Steuer- und Auswertungseinheit (28) dafür ausgebildet ist, einen Abstand sowohl mittels Triangulation im linearen PD-Modus und/oder im APD-Modus als auch mittels Lichtlaufzeitverfahren im SPAD-Modus zu bestimmen und die gemessenen Abstände miteinander zu verrechnen und/oder gegenseitig zu plausibilisieren.

13. Verfahren zur Erfassung eines Objekts (20) in einem Überwachungsbereich (18), bei dem ein Lichtsignal (169 ausgesandt, aus Empfangslicht (22) aus dem Überwachungsbereich (18) mit einer Vielzahl von Photodiodenelementen (26a) jeweilige Empfangssignale erzeugt und ausgewertet werden, um mit einem Lichtlaufzeitverfahren den Abstand zu dem Objekt (20) zu bestimmen sowie aus einer Intensität der Empfangssignale weitere Messinformationen zu gewinnen, wobei eine Vorspannung an den Photodiodenelementen (26a) derart verändert wird,

dass zumindest eines der Photodiodenelemente (26a) wahlweise in einem SPAD-Modus bei Vorspannung oberhalb einer Durchbruchspannung und somit in einem Geiger-Modus, in einem APD-Modus bei Vorspannung unterhalb der Durchbruchspannung bei kontrolliertem Lawinendurchbruch oder in einem linearen PD-Modus bei geringer oder ohne Vorspannung betrieben wird, wobei alle drei Modi oder der SPAD-Modus und einer der anderen beiden Modi wählbar sind,

**dadurch gekennzeichnet,**
**dass** für eine Abstandsmessung mittels Lichtlaufzeitverfahren in den SPAD-Modus und für eine Abstandsbestimmung mittels Triangulation in den APD-Modus oder den linearen PD-Modus geschaltet wird.

**Claims**

1. An optoelectronic sensor (10) for detecting an object (10) in a monitoring area (18), the sensor (10) comprising a light transmitter (12) for transmitting a light signal (16), a light receiver (26) for receiving received light (22) from the monitoring area (18) with a plurality of photodiode elements (26a) for generating respective received signals, and a control and evaluation unit (28) configured to evaluate the received signals in order to determine the distance to the object (20) using a light time of flight method and to obtain further measurement information from an intensity of the received signals, and to change a bias voltage of the photodiode elements (26a) in such a way that at least one of the photodiode elements (26a) is selectively operated in a SPAD mode with bias voltage above a breakdown voltage and thus in a Geiger mode, in an APD mode with bias voltage below the breakdown voltage with controlled avalanche breakdown, or in a linear PD mode with low or no bias voltage, wherein all three modes or the SPAD mode and one of the other two modes are selectable, **characterized in that** the control and evaluation unit (28) is further configured to switch to the SPAD mode for a distance measurement using a light time of flight method and to the APD mode or the linear PD mode for a distance determination using triangulation.

2. The sensor (10) according to claim 1, wherein the photodiode elements (26a) are connected to a plurality of evaluation circuits (36, 38, 40) for the SPAD mode (36), the APD (38) mode or the linear PD mode (40), respectively.

3. The sensor (10) according to claim 2, wherein a first evaluation circuit (40) comprises an amplifier element and/or an A/D converter for obtaining an intensity for the APD mode or the linear PD mode.

4. The sensor (10) according to claim 3, wherein the first evaluation circuit (40) comprises a comparator element for threshold evaluation.

5. The sensor (10) according to any of claims 2 to 4, wherein a second evaluation circuit (36) comprises a light time of flight measuring unit for the SPAD mode.

6. The sensor (10) according to any of the preceding claims, wherein the control and evaluation unit (28) is configured to switch to the linear PD mode for a measurement of the intensity, in particular an image acquisition.

7. The sensor (10) according to any of the preceding claims, wherein the control and evaluation unit (28) is configured to determine a mode for a subsequent operating phase.

8. The sensor (10) according to any of the preceding claims, wherein the control and evaluation unit (28) is configured to switch first to one mode for a preliminary measurement and then to another mode for a main measurement.

9. The sensor (10) according to any of the preceding claims, wherein the control and evaluation unit (28) is configured to first determine a coarse distance value and then, in the case of a distance value smaller than a distance threshold, to switch to the linear PD mode or the APD mode for a triangulation measurement and, in the case of a distance value greater than the distance threshold, to switch to the SPAD mode for a light time of flight measurement.

10. The sensor (10) according to any of the preceding claims, wherein the control and evaluation unit (28) is configured to first perform a light time of flight measurement in the SPAD mode and to switch to the linear PD mode for an image acquisition when an edge is detected.

11. The sensor (10) according to any of the preceding claims, wherein the control and evaluation unit (28) is configured to switch between a plurality of modes, in particular cyclically, and to jointly evaluate the respective detected received signals.

12. The sensor (10) according to any of the preceding claims, wherein the control and evaluation unit (28) is configured to determine a distance both using triangulation in the linear PD mode and/or in the APD mode and using a light time of flight method in the SPAD mode, and to combine the measured distances and/or to check their mutual plausibility.

13. A method for detecting an object (20) in a monitoring area (18), wherein a light signal (169) is transmitted, respective received signals are generated from received light (22) from the monitoring area (18) using a plurality of photodiode elements (26a) and are evaluated in order to determine the distance to the object (20) using a light time of flight method and to obtain further measurement information from an intensity of the received signals, wherein a bias voltage of the photodiode elements (26a) is changed so that at least one of the photodiode elements (26a) is selectively operated in a SPAD mode at a bias voltage above a breakdown voltage and thus in a Geiger mode, in an APD mode at a bias voltage below the breakdown voltage with controlled avalanche breakdown, or in a linear PD mode at low or no bias voltage, wherein all three modes or the SPAD mode and one of the other two modes are selectable, **characterized in that** for a distance measurement using a light time of flight method it is switched to the SPAD mode, and for a distance determination using triangulation it is switched to the APD mode or the linear PD.

## Revendications

1. Capteur optoélectronique (10) pour la détection d'un objet (10) dans une zone à surveiller (18), le capteur (10) comprenant un émetteur de lumière (12) destiné à émettre un signal lumineux (16), un récepteur de lumière (26) destiné à recevoir de la lumière de réception (22) provenant de la zone à surveiller (18) et comprenant une pluralité d'éléments de photodiode (26a) destinés à générer des signaux de réception respectifs, ainsi qu'une unité de commande et d'évaluation (28) réalisée pour évaluer les signaux de réception afin de déterminer la distance à l'objet (20) selon la méthode du temps de vol de lumière, pour obtenir d'autres informations de mesure à partir d'une intensité des signaux de réception, et pour modifier une tension de polarisation aux éléments de photodiode (26a) de telle sorte que l'un au moins des éléments de photodiode (26a) fonctionne au choix dans un mode SPAD avec une tension de polarisation supérieure à une tension de claquage, et donc en mode Geiger, dans un mode APD avec une tension de polarisation inférieure à la tension de claquage avec un claquage contrôlé par avalanche, ou dans un mode PD linéaire avec une tension de polarisation faible ou nulle, tous les trois modes ou le mode SPAD et l'un des deux autres modes pouvant être choisis, **caractérisé en ce que** l'unité de commande et d'évaluation (28) est en outre réalisée pour passer en mode SPAD pour une mesure de la distance selon la méthode du temps de vol de lumière, et pour passer en mode APD ou en mode PD linéaire pour une détermination de la distance par triangulation.

2. Capteur (10) selon la revendication 1, dans lequel les éléments de photodiode (26a) sont connectés à plusieurs circuits d'évaluation (36, 38, 40) respectivement pour le mode SPAD (36), le mode APD (38) ou le mode PD linéaire (40).

3. Capteur (10) selon la revendication 2, dans lequel un premier circuit d'évaluation (40) comprend un élément d'amplification et/ou un convertisseur A/N afin d'obtenir une intensité pour le mode APD ou pour le mode PD linéaire.

4. Capteur (10) selon la revendication 3, dans lequel le premier circuit d'évaluation (40) comprend un élément comparateur pour une évaluation de seuil.

5. Capteur (10) selon l'une des revendications 2 à 4, dans lequel un deuxième circuit d'évaluation (36) comprend un dispositif de mesure du temps de vol de lumière pour le mode SPAD.

6. Capteur (10) selon l'une des revendications précédentes, dans lequel l'unité de commande et d'évaluation (28) est réalisée pour passer en mode PD linéaire pour une mesure de l'intensité, en particulier pour une prise de vue.

7. Capteur (10) selon l'une des revendications précédentes, dans lequel l'unité de commande et d'évaluation (28) est réalisée pour définir un mode pour une phase de fonctionnement suivante.

8. Capteur (10) selon l'une des revendications précédentes, dans lequel l'unité de commande et d'évaluation (28) est réalisée pour passer d'abord dans un mode pour une mesure préliminaire et ensuite dans un autre mode pour une mesure principale.

9. Capteur (10) selon l'une des revendications précédentes, dans lequel l'unité de commande et d'évaluation (28) est réalisée pour déterminer d'abord une valeur de distance approximative, puis pour passer en mode PD linéaire ou en mode APD pour une mesure par triangulation lorsque la valeur de la distance est inférieure à un seuil de distance, et pour passer en mode SPAD pour une mesure du temps de vol de lumière lorsque la valeur de la distance est supérieure au seuil de distance.

10. Capteur (10) selon l'une des revendications précédentes, dans lequel l'unité de commande et d'évaluation (28) est réalisée pour effectuer d'abord une mesure du temps de vol de lumière en mode SPAD et, en cas de détection d'un bord, pour passer en mode PD linéaire pour une prise de vue.

**11.** Capteur (10) selon l'une des revendications précédentes,

dans lequel l'unité de commande et d'évaluation (28) est réalisée pour changer entre plusieurs modes, en particulier de manière cyclique, et pour évaluer conjointement les signaux de réception respectifs alors acquis.

**12.** Capteur (10) selon l'une des revendications précédentes,

dans lequel l'unité de commande et d'évaluation (28) est réalisée pour déterminer une distance aussi bien au moyen d'une triangulation en mode PD linéaire et/ou en mode APD qu'au moyen de la méthode du temps de vol de lumière en mode SPAD, et pour compenser les distances mesurées entre elles et/ou pour les rendre mutuellement plausibles.

**13.** Procédé de détection d'un objet (20) dans une zone à surveiller (18), dans lequel un signal lumineux (16) est émis, des signaux de réception respectifs sont générés à partir de la lumière de réception (22), provenant de la zone à surveiller (18), avec une pluralité d'éléments de photodiode (26a), et ils sont évalués pour déterminer la distance à l'objet (20) selon la méthode du temps de vol de lumière et pour obtenir d'autres informations de mesure à partir d'une intensité des signaux de réception,

une tension de polarisation aux éléments de photodiode (26a) est modifiée de telle sorte que l'un au moins des éléments de photodiode (26a) fonctionne au choix dans un mode SPAD avec une tension de polarisation supérieure à une tension de claquage, et donc en mode Geiger, dans un mode APD avec une tension de polarisation inférieure à la tension de claquage avec un claquage contrôlé par avalanche, ou dans un mode PD linéaire avec une tension de polarisation faible ou nulle, tous les trois modes ou le mode SPAD et l'un des deux autres modes pouvant être choisis, **caractérisé en ce que**

pour une mesure de la distance selon la méthode du temps de vol de lumière, on passe au mode SPAD, et pour une détermination de la distance par triangulation, on passe au mode APD ou au mode PD linéaire.

Figur 1

Figur 2

## Figur 3

Empfindlichkeit        Photonendichte

| SPAD | APD | PD |
| --- | --- | --- |
| Gain ≥ 1.000.00 | Gain 10-1.000 | Gain ≤1 |

Strom

0

0    Spannung

Ultrahoher Dynamikbereich

## Figur 4

Anzahl

44

Bin

Figur 5

Figur 6

## Figur 7

SPAD-
Modus

Kantenerkennung

PD-
Modus

Bildaufnahme

## Figur 8

SPAD-
Modus

Nahbereich

Abstand gemessen

PD-
Modus

Abstand
gemessen

Geringe Remission

APD-
Modus

Abstand gemessen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018132473
- WO 201717811 A1
- DE 102011005740 A1
- DE 102004037137 B4
- EP 2159603 B1
- DE 102004042466 A1
- US 20170097417 A1
- US 20180209846 A1
- US 8188418 B1
- EP 2711667 A1

**In der Beschreibung aufgeführte Nicht-Patentliteratur**

- **EISELE, ANDREAS et al.** 185 MHz count rate, 139 dB dynamic range singlephoton avalanche diode with active quenching circuit in 130 nm CMOS technology. *Int. Image Sensor Workshop (IISW),* 2011
- **HALLMAN, LAURI et al.** On 2-D Rangefinding Using a~ 1 nJ/~ 100 ps Laser Diode Transmitter and a CMOS SPAD Matrix. *IEEE Photonics Journal,* 2018